# EUROPEAN PATENT SPECIFICATION

(11) **EP 0 912 929 B1**
(45) Date of publication and mention of the grant of the patent: **03.09.2008**
(21) Application number: 96925350.9
(22) Date of filing: 16.07.1996
(51) Int. Cl.: G06F 9/345, G06F 9/38

(54) **A DATA ADDRESS PREDICTION STRUCTURE AND A METHOD FOR OPERATING THE SAME**
DATENADDRESSENVORBESTIMMUNGSSTRUKTUR UND ANWENDUNGSVERFAHREN
STRUCTURE DE PREDICTION D'ADRESSES DE DONNEES ET PROCEDE PERMETTANT DE LA FAIRE FONCTIONNER

(43) Date of publication of application: 06.05.1999
(73) Proprietor: ADVANCED MICRO DEVICES, INC., Austin TX 78741 (US)
(72) Inventor: TRAN, Thang, M., Austin, TX 78730 (US)
(74) Representative: Brookes Batchellor LLP
(86) International application number: PCT/US1996/011848
(87) International publication number: WO 1998/002807

(56) References cited:
- IEEE INTERNATIONAL CONFERENCE ON PARALLEL PROCESSING, 23 - 26 August 1983, pages 461-471, XP000212140 PLESZKUN AND DAVIDSON: "Structured Memory Access architecture"

## Description

### BACKGROUND OF THE INVENTION

### 1. Field of the Invention

This invention relates to the field of superscalar microprocessors and, more particularly, to data prediction mechanisms in superscalar microprocessors.

### 2. Description of the Relevant Art

Superscalar microprocessors achieve high performance by simultaneously executing multiple instructions in a clock cycle and by specifying the shortest possible clock cycle consistent with the design. As used herein, the term "clock cycle" refers to an interval of time during which the pipeline stages of a microprocessor perform their intended functions. For example, superscalar microprocessors are typically configured with multiple instruction processing pipelines which process instructions. The processing of instructions includes the actions of fetching, dispatching, decoding, executing, and writing back results. Each action may be implemented in one or more pipeline stages, and an instruction flows through each of the pipeline stages where an action or portion of an action is performed. At the end of a clock cycle, the instruction and the values resulting from performing the action of the current pipeline stage are moved to the next pipeline stage. When an instruction reaches the end of an instruction processing pipeline, it is processed and the results of executing the instruction have been recorded.

Since superscalar microprocessors execute multiple instructions per clock cycle in their multiple instruction processing pipelines and the clock cycle is short, a high bandwidth memory system is required to provide instructions and data to the superscalar microprocessor (i.e. a memory system that can provide a large number of bytes in a short period of time). Without a high bandwidth memory system, the microprocessor would spend a large number of clock cycles waiting for instructions or data to be provided, then would execute the received instructions and/or instructions dependent upon the received data in a relatively small number of clock cycles. Overall performance would be degraded by the large number of idle clock cycles. Superscalar microprocessors are, however, ordinarily configured into computer systems with a relatively large main memory composed of dynamic random access memory (DRAM) cells. DRAM cells are characterized by access times which are significantly longer than the clock cycle of modem superscalar microprocessors. Also, DRAM cells typically provide a relatively narrow output bus to convey the stored bytes to the superscalar microprocessor. Therefore, DRAM cells provide a memory system that provides a relatively small number of bytes in a relatively long period of time, and do not form a high bandwidth memory system.

Because superscalar microprocessors are typically not configured into a computer system with a memory system having sufficient bandwidth to continuously provide instructions and data, superscalar microprocessors are often configured with caches. Caches include multiple blocks of storage locations configured on the same silicon substrate as the microprocessor or coupled nearby. The blocks of storage locations are used to hold previously fetched instruction or data bytes. The bytes can be transferred from the cache to the destination (a register or an instruction processing pipeline) quickly; commonly one or two clock cycles are required as opposed to a large number of clock cycles to transfer bytes from a DRAM main memory.

Unfortunately, the latency of one or two clock cycles within a data cache is becoming a performance problem for superscalar microprocessors as they attempt to execute more instructions per clock cycle. The problem is of particular importance to superscalar microprocessors configured to execute instructions from a complex instruction set architecture such as the x86 architecture. As will be appreciated by one skilled in the art, x86 instructions allow for one of their "operands" (the values that the instruction operates on) to be stored in a memory location. Instructions which have an operand stored in memory are said to have an implicit (memory read) operation and an explicit operation which is defined by the particular instruction being executed (i.e. an add instruction has an explicit operation of addition). Such an instruction therefore requires an implicit address calculation for the memory read to retrieve the operand, the implicit memory read, and the execution of the explicit operation of the instruction (for example, an addition). Typical superscalar microprocessors have required that these operations be performed by the execute stage of the instruction processing pipeline. The execute stage of the instruction processing pipeline is therefore occupied for several clock cycles when executing such an instruction. For example, a superscalar microprocessor might require one clock cycle for the address calculation, one to two clock cycles for the data cache access, and one clock cycle for the execution of the explicit operation of the instruction. Conversely, instructions with operands stored in registers configured within the microprocessor retrieve the operands before they enter the execute stage of the instruction processing pipeline, since no address calculation is needed to locate the operands. Instructions with operands stored in registers would therefore only require the one clock cycle for the execution of the explicit operation. A structure allowing the retrieval of memory operands for instructions before they enter the execute stage is therefore desired.

IEEE INTERNATIONAL CONFERENCE OF PARALLEL PROCESSING, 23-26 August 1983, pages 461-471, XP000212140 PLESZKUN AND DAVIDSON: "Structured Memory Access Architecture" describes hardware for more efficient memory data access in a von Neumann architecture using a computation processor (CP) and a decoupled memory access processor (MAP). The MAP implements structured prefetching using read and write queues but cache with addresses generated by an address generator. Data from likely branch targets may be written into the read buffer which is then purged in the event of branch misprediction.

### SUMMARY OF THE INVENTION

The problems outlined above are in large part solved by a data address prediction structure for a superscalar microprocessor in accordance with the present invention as defined in claim 15 . The data prediction structure predicts a data address that a group of instructions is going to access while that group of instructions is being fetched from the instruction cache. The data bytes associated with the predicted address are placed in a relatively small, fast buffer. Decode stages of instruction processing pipelines in the microprocessor access the buffer with addresses generated from the instructions. If the associated data bytes are found in the buffer, the data bytes are conveyed to the reservation station associated with the requesting decode stage. Therefore, an implicit memory read operation associated with an instruction is performed prior to the instruction arriving in a functional unit (which forms the execute stage of the instruction processing pipeline). The functional unit is occupied by the instruction for a fewer number of clock cycles since it need not perform the implicit memory operation. The functional unit performs the explicit operation indicated by the instruction. Performance may be advantageously increased by using the clock cycles that would have been used to execute the implicit operation in the functional unit to execute other instructions.

Broadly speaking, the present invention contemplates a method for providing a plurality of bytes associated with a data prediction address which will be referenced by a plurality of instructions residing in a basic block when the basic block is fetched as defined in claim 1. The method comprises several steps. First, a data prediction address is generated. The data prediction address is then fetched from a data cache into a data buffer. The data buffer is later accessed for load data.

The present invention further contemplates a data address prediction structure comprising an array for storing data prediction addresses, a data buffer for storing data bytes associated with predicted data addresses, and a decode stage of an instruction processing pipeline configured to access the data buffer. The data prediction addresses are stored into a particular storage location within the array according to the address of a branch instruction which begins a basic block containing an instruction which generates the data prediction address.

### BRIEF DESCRIPTION OF THE DRAWINGS

Other objects and advantages of the invention will become apparent upon reading the following detailed description and upon reference to the accompanying drawings in which:
Figure 1 is a block diagram of a superscalar microprocessor.
Figure 2 is a diagram depicting a branch prediction unit, a load/store unit, and a data cache of the superscalar microprocessor of Figure 1, along with several elements of one embodiment of the present invention.
Figure 3A is a diagram of the branch prediction unit shown in Figure 2 depicting several elements of one embodiment of the present invention.
Figure 3B is a diagram of a decode unit of the superscalar microprocessor shown in Figure 1 showing several elements of one embodiment of the present invention.
Figure 4 is a diagram of the information stored in a storage location of a branch prediction array in accordance with the present invention.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

### DETAILED DESCRIPTION OF THE INVENTION

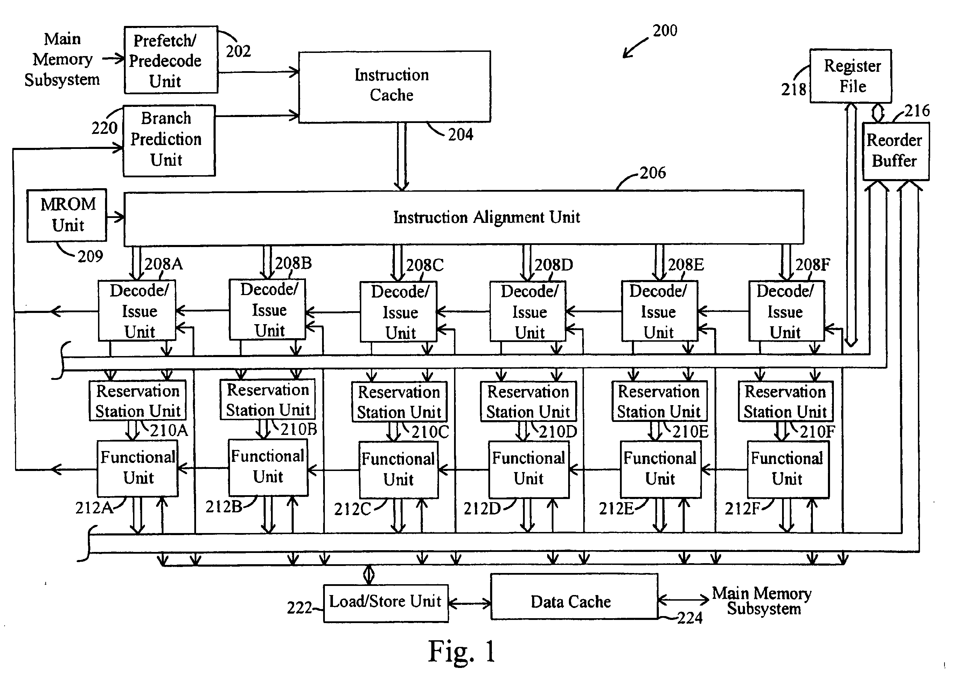

Turning now to Figure 1, a block diagram of a superscalar microprocessor 200 including decode units 208 and a branch prediction unit 220 in accordance with the present invention is shown. As illustrated in the embodiment of Figure 1, superscalar microprocessor 200 includes a prefetch/predecode unit 202 and a branch prediction unit 220 coupled to an instruction cache 204. Instruction alignment unit 206 is coupled between instruction cache 204 and a plurality of decode units 208A-208F (referred to collectively as decode units 208). Each decode unit 208A-208F is coupled to respective reservation station units 210A-210F (referred to collectively as reservation stations 210), and each reservation station 210A-210F is coupled to a respective functional unit 212A-212F (referred to collectively as functional units 212). Decode units 208, reservation stations 210, and functional units 212 are further coupled to a reorder buffer 216, a register file 218 and a load/store unit 222. A data cache 224 is finally shown coupled to load/store unit 222, and an MROM unit 209 is shown coupled to instruction alignment unit 206.

Generally speaking, instruction cache 204 is a high speed cache memory provided to temporarily store instructions prior to their dispatch to decode units 208. In one embodiment, instruction cache 204 is configured to cache up to 32 kilobytes of instruction code organized in lines of 16 bytes each (where each byte consists of 8 bits). During operation, instruction code is provided to instruction cache 204 by prefetching code from a main memory (not shown) through prefetch/predecode unit 202. It is noted that instruction cache 204 could be implemented in a set-associative, a fully-associative, or a direct-mapped configuration.

Prefetch/predecode unit 202 is provided to prefetch instruction code from the main memory for storage within instruction cache 204. In one embodiment, prefetch/predecode unit 202 is configured to burst 64-bit wide code from the main memory into instruction cache 204. It is understood that a variety of specific code prefetching techniques and algorithms may be employed by prefetch/predecode unit 202.

As prefetch/predecode unit 202 fetches instructions from the main memory, it generates three predecode bits associated with each byte of instruction code: a start bit, an end bit, and a "functional" bit. The predecode bits form tags indicative of the boundaries of each instruction. The predecode tags may also convey additional information such as whether a given instruction can be decoded directly by decode units 208 or whether the instruction must be executed by invoking a microcode procedure controlled by MROM unit 209, as will be described in greater detail below.

Table 1 indicates one encoding of the predecode tags. As indicated within the table, if a given byte is the first byte of an instruction, the start bit for that byte is set. If the byte is the last byte of an instruction, the end bit for that byte is set. If a particular instruction cannot be directly decoded by the decode units 208, the functional bit associated with the first byte of the instruction is set. On the other hand, if the instruction can be directly decoded by the decode units 208, the functional bit associated with the first byte of the instruction is cleared. The functional bit for the second byte of a particular instruction is cleared if the opcode is the first byte, and is set if the opcode is the second byte. It is noted that in situations where the opcode is the second byte, the first byte is a prefix byte. The functional bit values for instruction byte numbers 3-8 indicate whether the byte is a MODRM or an SIB byte, or whether the byte contains displacement or immediate data.

**Table 1. Encoding of Start, End and Functional Bits**

| Instr. Byte Number | Start Bit Value | End Bit Value | Functional Bit Value | Meaning |
|---|---|---|---|---|
| 1 | 1 | X | 0 | Fast decode |
| 1 | 1 | X | 1 | MROM instr. |
| 2 | 0 | X | 0 | Opcode is first |
| | | | | byte |
| 2 | 0 | X | 1 | Opcode is this |
| | | | | byte, first |
| | | | | byte is prefix |
| 3-8 | 0 | X | 0 | Mod R/M or |
| | | | | SIB byte |
| 3-8 | 0 | X | 1 | Displacement or |
| | | | | immediate data; |
| | | | | the second |
| | | | | functional bit |
| | | | | set in bytes |
| | | | | 3-8 indicates |
| | | | | immediate data |
| 1-8 | X | 0 | X | Not last byte |
| | | | | of instruction |
| 1-8 | X | 1 | X | Last byte of |
| | | | | instruction |

As stated previously, in one embodiment certain instructions within the x86 instruction set may be directly decoded by decode units 208. These instructions are referred to as "fast path" instructions. The remaining instructions of the x86 instruction set are referred to as "MROM instructions". MROM instructions are executed by invoking MROM unit 209. More specifically, when an MROM instruction is encountered, MROM unit 209 parses and serializes the instruction into a subset of defined fast path instructions to effectuate a desired operation. A listing of exemplary x86 instructions categorized as fast path instructions as well as a description of the manner of handling both fast path and MROM instructions will be provided further below.

Instruction alignment unit 206 is provided to channel variable byte length instructions from instruction cache 204 to fixed issue positions formed by decode units 208A-208F. Instruction alignment unit 206 independently and in parallel selects instructions from three groups of instruction bytes provided by instruction cache 204 and arranges these bytes into three groups of preliminary issue positions. Each group of issue positions is associated with one of the three groups of instruction bytes. The preliminary issue positions are then merged together to form the final issue positions, each of which is coupled to one of decode units 208.

Before proceeding with a detailed description of the data prediction structure embodied in decode units 208 and branch prediction unit 220, general aspects regarding other subsystems employed within the exemplary superscalar microprocessor 200 of Figure 1 will be described. For the embodiment of Figure 1, each of the decode units 208 includes decoding circuitry for decoding the predetermined fast path instructions referred to above. In addition, each decode unit 208A-208F routes displacement and immediate data to a corresponding reservation station unit 210A-210F. Output signals from the decode units 208 include bit-encoded execution instructions for the functional units 212 as well as operand address information, immediate data and/or displacement data.

The superscalar microprocessor of Figure 1 supports out of order execution, and thus employs reorder buffer 216 to keep track of the original program sequence for register read and write operations, to implement register renaming, to allow for speculative instruction execution and branch misprediction recovery, and to facilitate precise exceptions. As will be appreciated by those of skill in the art, a temporary storage location within reorder buffer 216 is reserved upon decode of an instruction that involves the update of a register to thereby store speculative register states. Reorder buffer 216 may be implemented in a first-in-first-out configuration wherein speculative results move to the "bottom" of the buffer as they are validated and written to the register file, thus making room for new entries at the "top" of the buffer. Other specific configurations of reorder buffer 216 are also possible, as will be described further below. If a branch prediction is incorrect, the results of speculatively-executed instructions along the mispredicted path can be invalidated in the buffer before they are written to register file 218.

The bit-encoded execution instructions and immediate data provided at the outputs of decode units 208A-208F are routed directly to respective reservation station units 210A-210F. In one embodiment, each reservation station unit 210A-210F is capable of holding instruction information (i.e., bit encoded execution bits as well as operand values, operand tags and/or immediate data) for up to three pending instructions awaiting issue to the corresponding functional unit. It is noted that for the embodiment of Figure 1, each decode unit 208A-208F is associated with a dedicated reservation station unit 210A-210F, and that each reservation station unit 210A-210F is similarly associated with a dedicated functional unit 212A-212F. Accordingly, six dedicated "issue positions" are formed by decode units 208, reservation station units 210 and functional units 212. Instructions aligned and dispatched to issue position 0 through decode unit 208A are passed to reservation station unit 210A and subsequently to functional unit 212A for execution. Similarly, instructions aligned and dispatched to decode unit 208B are passed to reservation station unit 210B and into functional unit 212B, and so on.

Upon decode of a particular instruction, if a required operand is a register location, register address information is routed to reorder buffer 216 and register file 218 simultaneously. Those of skill in the art will appreciate that the x86 register file includes eight 32 bit real registers (i.e., typically referred to as EAX, EBX, ECX, EDX, EBP, ESI, EDI and ESP). Reorder buffer 216 contains temporary storage locations for results which change the contents of these registers to thereby allow out of order execution. A temporary storage location of reorder buffer 216 is reserved for each instruction which, upon decode, is determined to modify the contents of one of the real registers. Therefore, at various points during execution of a particular program, reorder buffer 216 may have one or more locations which contain the speculatively executed contents of a given register. If following decode of a given instruction it is determined that reorder buffer 216 has a previous location or locations assigned to a register used as an operand in the given instruction, the reorder buffer 216 forwards to the corresponding reservation station either: 1) the value in the most recently assigned location, or 2) a tag for the most recently assigned location if the value has not yet been produced by the functional unit that will eventually execute the previous instruction. If the reorder buffer has a location reserved for a given register, the operand value (or tag) is provided from reorder buffer 216 rather than from register file 218. If there is no location reserved for a required register in reorder buffer 216, the value is taken directly from register file 218. If the operand corresponds to a memory location, the operand value is provided to the reservation station unit through load/store unit 222.

Details regarding suitable reorder buffer implementations may be found within the publication "Superscalar Microprocessor Design" by Mike Johnson, Prentice-Hall, Englewood Cliffs, New Jersey, 1991, and within the co-pending, commonly assigned patent application entitled "High Performance Superscalar Microprocessor", Serial No. 08/146,382, filed October 29, 1993 by Witt, et al.

Reservation station units 210A-210F are provided to temporarily store instruction information to be speculatively executed by the corresponding functional units 212A-212F. As stated previously, each reservation station unit 210A-210F may store instruction information for up to three pending instructions. Each of the six reservation stations 210A-210F contain locations to store bit-encoded execution instructions to be speculatively executed by the corresponding functional unit and the values of operands. If a particular operand is not available, a tag for that operand is provided from reorder buffer 216 and is stored within the corresponding reservation station until the result has been generated (i.e., by completion of the execution of a previous instruction). It is noted that when an instruction is executed by one of the functional units 212A-212F, the result of that instruction is passed directly to any reservation station units 210A-210F that are waiting for that result at the same time the result is passed to update reorder buffer 216 (this technique is commonly referred to as "result forwarding"). Instructions are issued to functional units for execution after the values of any required operand(s) are made available. That is, if an operand associated with a pending instruction within one of the reservation station units 210A-210F has been tagged with a location of a previous result value within reorder buffer 216 which corresponds to an instruction which modifies the required operand, the instruction is not issued to the corresponding functional unit 212 until the operand result for the previous instruction has been obtained. Accordingly, the order in which instructions are executed may not be the same as the order of the original program instruction sequence. Reorder buffer 216 ensures that data coherency is maintained in situations where read-after-write dependencies occur.

In one embodiment, each of the functional units 212 is configured to perform integer arithmetic operations of addition and subtraction, as well as shifts, rotates, logical operations, and branch operations. It is noted that a floating point unit (not shown) may also be employed to accommodate floating point operations.

Each of the functional units 212 also provides information regarding the execution of conditional branch instructions to the branch prediction unit 220. If a branch prediction was incorrect, branch prediction unit 220 flushes instructions subsequent to the mispredicted branch that have entered the instruction processing pipeline, and causes prefetch/predecode unit 202 to fetch the required instructions from instruction cache 204 or main memory. It is noted that in such situations, results of instructions in the original program sequence which occur after the mispredicted branch instruction are discarded, including those which were speculatively executed and temporarily stored in load/store unit 222 and reorder buffer 216. Exemplary configurations of suitable branch prediction mechanisms are well known.

Results produced by functional units 212 are sent to the reorder buffer 216 if a register value is being updated, and to the load/store unit 222 if the contents of a memory location is changed. If the result is to be stored in a register, the reorder buffer 216 stores the result in the location reserved for the value of the register when the instruction was decoded. As stated previously, results are also broadcast to reservation station units 210A-210F where pending instructions may be waiting for the results of previous instruction executions to obtain the required operand values.

Generally speaking, load/store unit 222 provides an interface between functional units 212A-212F and data cache 224. In one embodiment, load/store unit 222 is configured with a load/store buffer with eight storage locations for data and address information for pending loads or stores. Decode units 208 arbitrate for access to the load/store unit 222. When the buffer is full, a decode unit must wait until the load/store unit 222 has room for the pending load or store request information. The load/store unit 222 also performs dependency checking for load instructions against pending store instructions to ensure that data coherency is maintained.

Data cache 224 is a high speed cache memory provided to temporarily store data being transferred between load/store unit 222 and the main memory subsystem. In one embodiment, data cache 224 has a capacity of storing up to eight kilobytes of data. It is understood that data cache 224 may be implemented in a variety of specific memory configurations, including a set associative configuration.

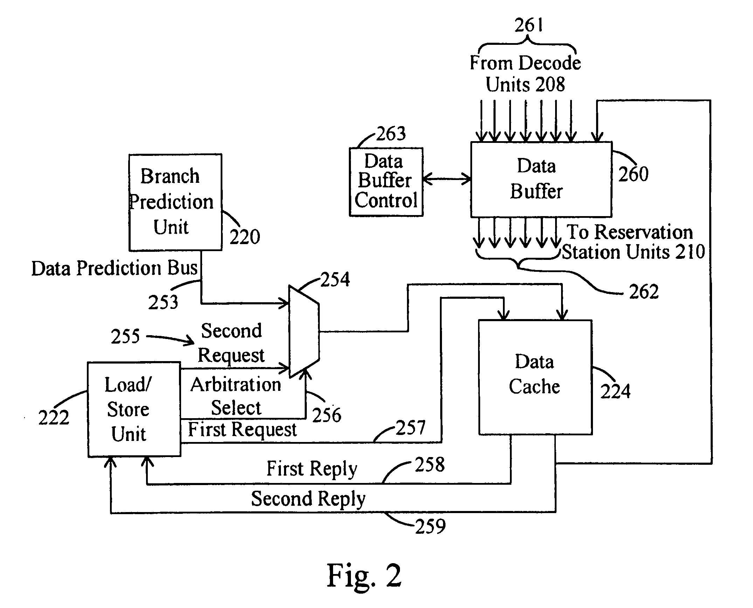

Turning now to Figure 2, several elements of one embodiment of a data prediction structure are shown. Branch prediction unit 220 is included, along with load/store unit 222 and data cache 224. Branch prediction unit 220 is connected to a data prediction bus 253 which is coupled to an arbitration multiplexor 254. Also coupled to arbitration multiplexor 254 is a second request bus 255 and an arbitration select line 256. In this embodiment, signals on both second request bus 255 and arbitration select line 256 originate in load/store unit 222. The output bus of arbitration multiplexor 254 is coupled to an input port of data cache 224. A first request bus 257 is coupled between load/store unit 222 and an input port of data cache 224. Data cache 224 is configured with two output ports which are coupled to a first reply bus 258 and a second reply bus 259. Both first reply bus 258 and second reply bus 259 are coupled to load/store unit 222, and second reply bus 259 is coupled to a data buffer 260. Associated with data buffer 260 is a data buffer control unit 263. Data buffer 260 is also coupled to a plurality of decode address request buses 261 provided by decode units 208. Associated with the plurality of decode address request buses 261 is a plurality of data buses 262.

Generally speaking, data buffer 260 is a relatively small, high speed cache provided to store data bytes associated with data prediction addresses provided by branch prediction unit 220. During a clock cycle in which branch prediction unit 220 predicts a taken branch instruction, it also produces a data prediction address on data prediction bus 253. The data prediction address is a prediction of the data addresses that are used by instructions residing at the target address of the predicted branch instruction. During clock cycles in which the data prediction address is selected by arbitration multiplexor 254, the data prediction address accesses data cache 224. The data cache line of data bytes associated with the data prediction address is transferred on second reply bus 259 to a write port on data buffer 260. Data buffer 260 stores the data bytes along with the data prediction address under the direction of control unit 263. Decode units 208, in a later clock cycle, may request data bytes associated with an implicit memory read operation of an instruction using the plurality of decode address request buses 261. The requested data bytes are provided to the respective reservation station 210 associated with a decode unit 208 which requested the data bytes. Because data buffer 260 is relatively small, it is capable of providing data within the same clock cycle that an address request is made (as opposed to requiring the entire cycle or more, as a typical data cache does). Therefore, the implicit memory read associated with an instruction may be performed before the instruction enters a functional unit 212, and only the explicit operation of the instruction is executed in functional unit 212. Performance may be advantageously increased by allowing other instructions to execute during cycles that such an implicit memory read operation would have occupied functional unit 212.

As stated previously, branch unit 220 produces a data prediction address during clock cycles in which a taken branch is predicted. Instructions residing at the target address of the taken branch instruction are therefore in a new "basic block". Basic blocks are blocks of instructions having the property that if the first instruction in the block is executed, then each subsequent instruction in the block is executed. Basic blocks end with a branch instruction. One property often associated with the instructions in a basic block is "data locality". The property of data locality exists when the instructions of a basic block access data memory locations which are physically near each other (perhaps in the same data cache line). Therefore, if a data cache line that a basic block will access is fetched simultaneously with the instructions that reside in the basic block, the data cache latency can be endured before the instructions are prepared to access the data bytes. Then, when the instructions access the data buffer the latency is shorter. Data may be accessed in an amount of time similar to a register data access from register file 218 of Figure 1.

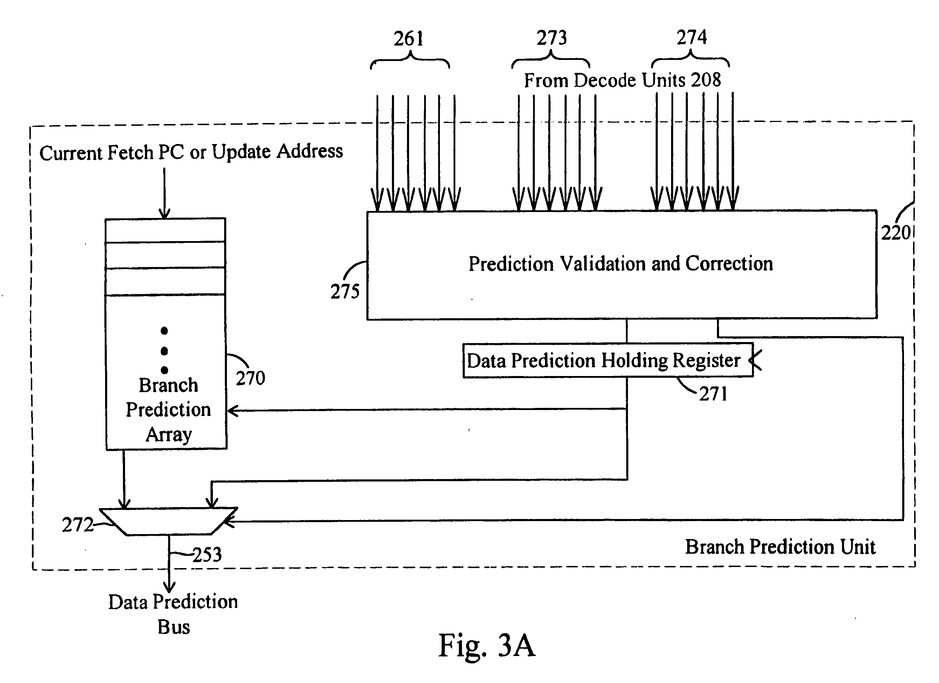

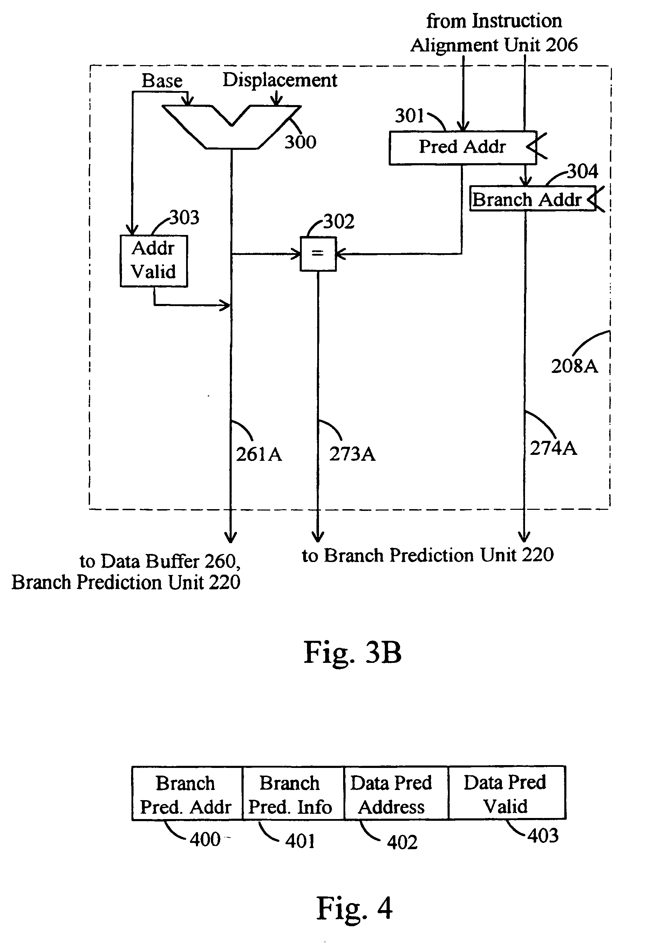

When a data prediction address misprediction is detected (as described below with respect to Figures 3A and 3B), the branch instruction address associated with the data prediction address and the correct data prediction address are conveyed to branch prediction unit 220. Branch prediction unit 220 stores the correct prediction address for use in a subsequent prediction for the basic block.

The data prediction address is conveyed on data prediction bus 253 to arbitration multiplexor 254, which arbitrates between the data prediction address and a second request from load/store unit 222. The term arbitration, as used herein, means the selection of one request over another according to an arbitration scheme. In one embodiment, the arbitration scheme is a priority scheme in which a load/store request conveyed on second request bus 255 is a higher priority that the data prediction address request. Therefore, the arbitration select signal conveyed on arbitration select line 256 is an indication that a load/store request is being conveyed on second request bus 255. If a valid load/store request is being made during a clock cycle, arbitration multiplexor 254 selects the load/store request to be conveyed to data cache 224. If no valid load/store request is being made during a clock cycle, arbitration multiplexor 254 selects the data prediction address to be conveyed to data cache 224.

In one embodiment, load/store unit 222 is configured to make up to two requests to data cache 224 in a clock cycle. In clock cycles where load/store unit 222 is making one request, first request bus 257 is used to allow the data prediction address the maximum opportunity to access data cache 224. If a data prediction address request is valid during a clock cycle in which load/store unit 222 is making no requests or one request to data cache 224, then the data prediction address request will be given access to data cache 224. Load/store unit 222 receives the data bytes associated with requests on first request bus 257 and second request bus 255 on first reply bus 258 and second reply bus 259, respectively. It is noted that other embodiments of load/store unit 222 may have different numbers of request buses for data cache 224.

Second reply bus 259 is also coupled to a write port on data buffer 260. Data buffer control unit 263 detects cycles when the data prediction address is selected by arbitration multiplexor 254 and hits in data cache 224, and causes data buffer 260 to store the data conveyed on second reply bus 259. In one embodiment, the entire cache line associated with the data prediction address is conveyed on second reply bus 259 to data buffer 260. In this embodiment, data buffer 260 is configured with eight storage locations each of which store a data prediction address and the associated data bytes. Data buffer control unit 263 operates the storage locations of this embodiment as a first-in, first-out stack. It is noted that other replacement policies could be alternatively used.

Data buffer 260 is also configured with a number of read ports, one for each decode unit 208. Each of the plurality of decode address request buses 261 is coupled to a respective read port. Decode units 208 each provide a request address on one of the plurality of decode address request buses 261. Each request address is compared to the addresses stored in data buffer 260. If a match is detected, data bytes associated with the address are conveyed on the associated one of the plurality of data buses 262 to the reservation station unit 210A-210F associated with the requesting decode unit 208A-208F. The associated reservation station 210A-210F stores the data bytes in the same manner that it stores data bytes from a register. If the data bytes for the memory operand of an instruction are stored with the instruction in a reservation station 210A-210F, then the associated functional unit 212A-212F does not perform the implicit memory read for that instruction. Instead, it executes the explicit operation of the instruction. If the data bytes of the memory operand are not stored with the instruction in a reservation station 210A-210F, then the implicit address calculation and memory read operation are performed by the associated functional unit 212A-212F prior to performing the explicit operation of the instruction.

Data buffer control unit 263 is further configured to monitor first request bus 257 and second request bus 255 for store memory accesses. When data buffer control unit 263 detects a store memory access, it invalidates the associated cache line in data buffer 260 (if the cache line is currently stored in data buffer 260). Similarly, if data cache 224 replaces a line with data fetched from main memory, the replaced line is invalidated in data buffer 260. Reorder buffer 216 implements dependency checking for reads that follow writes in cases where the reads receive their data from data buffer 260 before the write occurs to data cache 224. In this manner, read-after-write hazards and data coherency are correctly handled with respect to data buffer 260.

Turning now to Figure 3A, an embodiment of branch prediction unit 220 is shown. The data prediction addresses are stored within a branch prediction array 270 along with branch prediction information. In this embodiment, branch prediction array 270 is a linear array of storage locations. The current fetch address is used to index into branch prediction array 270 and select a storage location, and the data stored within that storage location is used to form the aforementioned branch prediction. It is noted that any branch prediction scheme may be implemented by branch prediction unit 220. Also stored within the selected storage location is a data prediction address. The data prediction address is conveyed on data prediction bus 253 except during clock cycles in which an updated data prediction address associated with the current fetch address is stored in a data prediction holding register 271.

Data prediction holding register 271 stores a data prediction address update until the next taken branch or branch misprediction is detected, and then the update is stored into branch prediction array 270. During the clock cycles between storing the update in data prediction holding register 271 and the subsequent update into branch prediction array 270, the instruction address associated with the update is compared to the current fetch PC. If a match is found, then the data prediction address is selected from data prediction holding register 271 by output multiplexor 272. If a match is not found, then the data prediction address from branch prediction array 270 is selected as the output of multiplexor 272.

In one embodiment, branch prediction unit 220 receives three sets of inputs from decode units 208. First, branch prediction unit 220 receives the plurality of decode address request buses 261 which convey the actual data addresses generated by decode units 208 as well as a valid indicator for each address indicating that the address is valid. If a decode unit 208A-208F detects a mispredicted data prediction address, the associated one of decode address request buses 261 will convey the corrected address (as will be explained below with respect to Figure 3B). Each decode unit 208A-208F also provides one of a plurality of mispredicted lines 273 indicating whether or not the actual data address conveyed on the associated one of decode address request buses 261 matches the data prediction address provided with the instruction currently being decoded. Finally, branch prediction unit 220 receives a plurality of branch address buses 274 from decode units 208 conveying branch instruction addresses associated with the data prediction addresses. The branch address is used to index into branch prediction array 270 in order to store the updated data prediction address. Decode address request buses 261, mispredicted lines 273, and branch address buses 274 are received by a prediction validation and correction block 275 within branch prediction unit 220. If one of mispredicted lines 273 signals an incorrect prediction and the corresponding address valid bit from the associated one of decode address request buses 261 indicates the actual data address conveyed on that associated decode address request bus is valid, then prediction validation and correction block 275 causes the corresponding actual data address to be stored in data prediction holding register 271 as the new prediction address. The corresponding branch instruction address is also stored in data prediction holding register 271 as the index for updating branch prediction array 270. In this manner, a data prediction address is corrected if predicted incorrectly. Additionally, a data prediction address is created if a valid data prediction address was not previously stored in branch prediction array 270. A particular one of mispredicted lines 273 indicates a misprediction if the data prediction address associated with the instruction currently being decoded is invalid. Therefore, the address provided on the associated one of decode request address buses 261 is stored as the data prediction address.

If a particular one of mispredicted lines 273 signals a correct prediction and the corresponding address valid bit conveyed on the corresponding one of decode address request buses 261 is set, then prediction validation and correction block 275 causes the previous prediction to be left unchanged and nothing is stored in data holding register 271. For mispredicted lines and address valid bits in a given clock cycle, decode unit 208A's outputs are given highest priority, then decode unit 208B's outputs, etc. In this manner, the first data address calculated by the instructions in a basic block is used to validate and create the data prediction addresses. Once a data prediction address is validated or changed, the associated branch instruction address is saved by prediction validation and correction block 275. Subsequent signals are ignored by prediction validation and correction unit 275 until a branch address different from the saved branch instruction address is conveyed from a decode unit 208 to branch prediction unit 220.

Turning now to Figure 3B, an embodiment of decode unit 208A is depicted. Decode units 208B-208F are configured similar to decode unit 208A. The logic circuits shown in Figure 3B are exemplary circuits for implementing the data prediction structure. Other circuits (not shown) decode x86 instructions into a format suitable for functional units 212. Therefore, decode units 208 are each a decode stage of an instruction processing pipeline.

In order to implement one embodiment of the data prediction structure, several logic elements are added to decode unit 208A: an adder circuit 300, a prediction address register 301, a comparator circuit 302, an address valid logic circuit 303, and a branch address register 304. Adder circuit 300 is used to add the contents of a base register and a displacement value to produce an actual data address if the instruction being decoded by decode unit 208A has a memory operand. In one embodiment, the base register is the EBP or ESP register, and the displacement value is conveyed with the instruction bytes as part of the instruction. This type of addressing is a common addressing mode used for x86 instructions. If the base register is not available, or the instruction does not have an operand residing in a memory location, or the addressing mode is different then a base register and displacement value, then validation logic circuit 303 indicates that the actual data address formed by adder circuit 300 is invalid. Reservation station unit 210A ignores any data bytes that may be transferred from data buffer 260 in clock cycles where the address formed by adder circuit 300 is invalid. The output of address valid circuit 303 is conveyed with the address, as indicated in Figure 3B. If the address formed by adder circuit 300 is invalid and the instruction requires a memory operand, the implicit load operation associated with the instruction will be executed by functional unit 212A.

The actual data address formed by adder circuit 300 is conveyed on decode address request bus 261A to data buffer 260 and branch prediction unit 220. Decode address request bus 261A is one of the plurality of decode address request buses 261. If the actual data address is a hit in data buffer 260, the associated data bytes are returned to reservation station 210A on one of the plurality of data buses 262. The actual data address is also conveyed to comparator circuit 302 which is coupled to prediction address register 301. Prediction address register 301 stores the data prediction address for the instruction currently being decoded. The data prediction address is transferred to decode unit 208A with the instruction. Also transferred is a valid bit indicative of whether or not a data address prediction was made for the block associated with the instructions (stored in prediction address register 301), and the instruction address of the branch instruction associated with the data prediction address (stored in branch address register 304). If both the data prediction address and the actual data address are valid and compare equal, then comparator circuit 302 conveys a value indicating that the data address prediction is correct to branch prediction unit 220. If either address is invalid or the addresses do not compare equal, then the output of comparator circuit 302 conveys a value indicating that the data prediction address is incorrect to branch prediction unit 220. The value is conveyed on a mispredicted line 273A. Mispredicted line 273A is one of the plurality of mispredicted lines 273. The branch instruction address stored in branch address register 304 is conveyed on a branch address bus 274A. Branch address bus 274A is one of the plurality of branch address buses 274.

Turning now to Figure 4, a diagram of the fields within a storage location of branch prediction array 270 is shown. A branch prediction address field 400 is included for storing a branch prediction address associated with a fetch address which indexes to the storage location. In one embodiment, 12 bits of the address are stored. The 12 bits that are stored are the index to instruction cache 204 that contains the target branch instructions. Associated with the branch prediction address is a branch prediction information field 401. In one embodiment, the branch prediction information field includes counters associated with the branch prediction mechanism, the way value of the indexed line within instruction cache 204 which contains the branch target instructions, the byte position within the current line that contains the branch instruction that generated the associated prediction address, and a valid bit indicating whether or not the branch prediction address is valid.

Another field of information stored in the storage locations of branch prediction array 270 is the data prediction address field 402. The data prediction address is stored in this field. Associated with the data prediction address is a data prediction address valid bit 403 which indicates whether or not the data prediction address is valid.

In another embodiment, multiple branch prediction address fields and branch prediction information fields are stored within each storage location of branch prediction array 270. In yet another embodiment multiple data prediction addresses are stored, along with a selection mechanism to determine which data address to select. One particular embodiment stores two data prediction addresses and a two bit counter to select between the two. The most significant bit of the counter selects the data prediction address to be used for a particular prediction. If the most significant bit is set, then the second data prediction address is selected. If the most significant bit is cleared, then the first data prediction address is selected. The counter increments each time the second data prediction address is selected and is a correct prediction and increments each time the first data prediction prediction is selected and is an incorrect prediction. The counter decrements each time the first data prediction address is selected and is a correct prediction and decrements each time the second data prediction address is selected and is an incorrect prediction.

In another embodiment of the data address prediction structure, data prediction address bus 253 is connected to an additional read port on data cache 224. In this embodiment, arbitration multiplexor 254 may be eliminated. It is noted that, although the preceding discussion described an embodiment of the data prediction structure within a processor implementing the x86 architecture, any microprocessor architecture could benefit from the data prediction structure.

In accordance with the above disclosure, a data address prediction structure is described which allows an implicit memory operation of an instruction to be performed before the instruction reaches a functional unit. Therefore, the number of cycles required in a functional unit to execute the instruction is advantageously reduced. Performance may be increased by implementing such a data prediction structure.

Numerous variations and modifications will become apparent to those skilled in the art once the above disclosure is fully appreciated. It is intended that the following claims be interpreted to embrace all such variations and modifications.

## Claims

1. A method for providing a pluratity of bytes associated with a data prediction address which will be referenced by a plurality of instructions residing in a basic block when said basic block is fetched, said method comprising:
generating a plurality of data prediction addresses and storing these in a branch prediction array (270) including a plurality of storage locations, wherein a particular one of said plurality of storage locations in which a particular one of said plurality of data prediction addresses is stored is determined by the instruction address of a branch instruction which points to said basic block;
fetching said said plurality of bytes from a data cache (224) into a data buffer (260); and
accessing the data buffer from the decode stage (208) of an instruction processing pipeline to provide said plurality of bytes;
wherein said basic block comprises a block of instructions ending with a branch instruction and having the property that if the first instruction in the block is executed, then each subsequent instruction in the block is executed.

2. The method as recited in claim 1 further comprising arbitrating said data prediction address with a load/store address from a load/store unit (222) for access to said data cache prior to said accessing.

3. The method as recited in claim 2 wherein said arbitrating selects said load/store address for access to said data cache during a clock cycle in which said load/store address is valid.

4. The method as recited in claim 2 or 3 wherein said arbitrating selects said data prediction address for access to said data cache during a clock cycle in which said load/store address is not valid.

5. The method as recited in any preceding claim further comprising updating said branch prediction array with a new data prediction address during a clock cycle in which said data prediction address is found to be mispredicted.

6. The method as recited in claim 5 wherein said data prediction address is found to be mispredicted by comparing said data prediction address to a decode address generated by said decode stage.

7. The method as recited in claim 5 wherein said updating is delayed until a next basic block is fetched.

8. The method as recited in claim 5 wherein said updating further comprises storing said new data prediction address into said branch prediction array in a storage location wherein said storage location previously stored said data prediction address.

9. The method as recited in any preceding claim further comprising generating an actual data address from a base register and a displacement data wherein said base register and said displacement data are specified by one of said plurality of instructions.

10. The method as recited in claim 9 further comprising comparing said actual data address to said data prediction address.

11. The method as recited in claim 10 further comprising transferring said data address and a result of said comparing to a branch prediction unit (220), said branch prediction unit comprising said branch prediction array (270).

12. The method as recited in claim 9 wherein said accessing said data buffer further comprises determining if a plurality of bytes associated with said actual data address are stored within said data buffer.

13. The method as recited in claim 12 further comprising transferring said plurality of bytes to a reservation station unit (210) of said instruction processing pipeline.

14. The method as recited in any preceding claim wherein generating a said data prediction address is performed during a clock cycle in which said basic block is being fetched from an instruction cache (204).

15. A data address prediction structure comprising:
a branch prediction array (270) including a plurality of storage locations for storing a plurality of data prediction addresses wherein a particular one of said plurality of storage locations in which a particular one of said plurality of data prediction addresses is stored is determined by the instruction address of a branch instruction which points to a basic block containing an instruction which with reference said data prediction address;
a data buffer (260) for storing a plurality of bytes associated with a data prediction address; and
a decode stage (208) of an instruction processing pipeline configured to access said data buffer;
wherein said basic block comprises a block of instructions ending with a branch instruction and having the property that if the first instruction in the block is executed, then each subsequent instruction in the block is executed.

16. The data address prediction structure as recited in claim 15 wherein said branch prediction array is a linear array of said storage locations.

17. The data address prediction structure as recited in claim 15 or 16 wherein said buffer is further configured to simultaneously store a plurality of pluralities of data bytes wherein each one of said plurality of pluralities of data bytes is associated with a different data prediction address.

18. The data address prediction structure as recited in claim 15, 16 or 17 further comprising a data cache (224) coupled to said data buffer and further coupled to said branch prediction array, wherein said data prediction address is used to fetch data from said data cache into said data buffer.

19. The data address prediction structure as recited in any one of claims 15 to 18 wherein said decode stage includes an adder circuit (300) for producing a data address from a base register and a displacement value.

20. The data prediction structure as recited in claim 19 wherein said decode stage further includes a comparator circuit (302) and a register (301) wherein said comparator circuit is coupled to said adder circuit and said register.

21. The data prediction structure as recited in claim 20 wherein said register is configured to store said data prediction address.

22. The data prediction structure as recited in claim 21 wherein said comparator circuit is configured to produce a value indicative of the correctness of said data prediction address.

23. The data prediction structure as recited in claim 22 wherein said comparator circuit is configured to convey said value to said branch prediction array.

## Patentansprüche

1. Verfahren zur Bereitstellung mehrerer Bytes, die mit einer Datenvorhersageadresse verknüpft sind und auf die durch mehrere Befehle, die in einem Basisblock angeordnet sind, zugegriffen wird, wenn der Basisblock abgeholt wird, wobei das Verfahren umfasst:
Erzeugen mehrerer Datenvorhersageadressen und Speichern dieser Adressen in einem Verzweigungsvorhersagearray (270) mit mehreren Speicherplätzen, wobei ein spezieller der mehreren Speicherplätze, in welchem eine spezielle der mehreren Datenvorhersageadressen gespeichert ist, durch die Befehlsadresse eines Verzweigungsbefehls bestimmt wird, die auf den Basisblock zeigt;
Abholen der mehreren Bytes aus einem Datencache-Speicher (224) und Einladen in einen Datenpuffer (260); und
Zugreifen auf den Datenpuffer durch die Decodierstufe (208) einer Befehlsverarbeitungspipeline, um die mehreren Bytes bereitzustellen;
wobei der Basisblock einen Block aus Befehlen umfasst, der mit einem Verzweigungsbefehlt endet und die Eigenschaft besitzt, dass, wenn der erste Befehl in dem Block ausgeführt wird, dann auch jeder nachfolgende Befehl in dem Block ausgeführt wird.

2. Verfahren nach Anspruch 1, das ferner umfasst: konkurrierendes Auswählen der Datenvorhersageadresse und einer Lade/Schreib-Adresse aus einer Lade/Schreibeinheit (222) für den Zugriff auf den Datencache-Speicher vor dem Zugreifen.

3. Verfahren nach Anspruch 2, wobei das konkurrierende Auswählen die Lade/Schreibadresse für den Zugriff auf den Datencache-Speicher während eines Taktzyklus auswählt, in welchem die Lade/Schreib-Adresse gültig ist.

4. Verfahren nach Anspruch 2 oder 3, wobei das konkurrierende Auswählen die Datenvorhersageadresse für das Zugreifen auf den Datencache-Speicher während eines Taktzyklus auswählt, in welchem die Lade/Schreib-Adresse nicht gültig ist.

5. Verfahren nach einem der vorhergehenden Ansprüche, das ferner umfasst: Aktualisieren des Verzweigungsvorhersagearrays mit einer neuen Datenvorhersageadresse während eines Taktzyklus, in welchem die Datenvorhersageadresse als falsch vorhergesagt ermittelt wird.

6. Verfahren nach Anspruch 5, wobei die Datenvorhersageadresse als falsch vorhergesagt ermittelt wird, indem die Datenvorhersageadresse mit einer Decodieradresse, die von der Decodierstufe erzeugt wird, verglichen wird.

7. Verfahren nach Anspruch 5, wobei das Aktualisieren verzögert wird bis ein nächster Basisblock abgeholt wird.

8. Verfahren nach Anspruch 5, wobei das Aktualisieren ferner umfasst: Speichern der neuen Datenvorhersageadresse in dem Verzweigungsvorhersagearray an einem Speicherplatz, wobei der Speicherplatz zuvor die Datenvorhersageadresse enthält.

9. Verfahren nach einem der vorhergehenden Ansprüche, das ferner umfasst: Erzeugen einer eigentlichen Datenadresse aus einem Basisregister und Verschiebungsdaten,
wobei das Basisregister und die Verschiebungsdaten durch einen der mehreren Befehle spezifiziert sind.

10. Verfahren nach Anspruch 9, das ferner umfasst: Vergleichen der eigentlichen Datenadresse mit der Datenvorhersageadresse.

11. Verfahren nach Anspruch 10, das ferner umfasst: Übertragen der Datenadresse und eines Ergebnisses des Vergleichs zu einer Verzweigungsvorhersageeinheit (220),
wobei die Verzweigungsvorhersageeinheit das Verzweigungsvorhersagearray (270) umfasst.

12. Verfahren nach Anspruch 9, wobei das Zugreifen auf den Datenpuffer ferner umfasst: Bestimmen, ob mehrere Bytes, die mit der eigentlichen Datenadresse verknüpft sind, in dem Datenpuffer gespeichert sind.

13. Verfahren nach Anspruch 12, das ferner umfasst: Übertragen der mehreren Bytes an eine Reservierstationseinheit (210) der Befehlsverarbeitungspipeline.

14. Verfahren nach einem der vorhergehenden Ansprüche, wobei Erzeugen einer Datenvorhersageadresse ausgeführt wird während eines Taktzyklus, in welchem der Basisblock von einem Befehlscache-Speicher (204) abgeholt wird.

15. Datenadressenvorhersagestruktur mit:
einem Verzweigungsvorhersagearray (270) mit mehreren Speicherplätzen zum Speichern mehrerer Datenvorhersageadressen, wobei ein spezieller der mehreren Speicherplätze, in dem eine spezielle der mehreren Datenvorhersageadressen gespeichert ist, bestimmt wird durch die Befehlsadresse eines Verzweigungsbefehls, der auf einen Basisblock mit einem Befehl zeigt, der auf die Datenvorhersageadresse Bezug nimmt;
einem Datenpuffer (260) zum Speichern mehrerer Bytes, die mit der Datenvorhersageadresse verknüpft sind; und
einer Decodierstufe (208) einer Befehlsverarbeitungspipeline, die ausgebildet ist, auf den Datenpuffer zuzugreifen;
wobei der Basisblock einen Block aus Befehlen aufweist, der mit einem Verzweigungsbefehl endet und die Eigenschaft besitzt, dass, wenn der erste Befehl in dem Block ausgeführt wird, auch jeder nachfolgende Befehl in dem Block ausgeführt wird.

16. Datenadressenvorhersagestruktur nach Anspruch 15, wobei das Verzweigungsvorhersagearray ein lineares Array der Speicherplätze ist.

17. Datenadressenvorhersagestruktur nach Anspruch 15 oder 16, wobei der Puffer ferner ausgebildet ist, eine Mehrzahl aus mehreren Datenbytes gleichzeitig zu speichern, wobei jede der Mehrzahl aus mehreren Datenbytes mit einer unterschiedlichen Datenvorhersageadresse verknüpft ist.

18. Datenadressenvorhersagestruktur nach Anspruch 15, 16 oder 17, die ferner einen Datencache-Speicher (224) umfasst, der mit dem Datenpuffer verbunden ist und ferner mit dem Verzweigungsvorhersagearray verbunden ist, wobei die Datenvorhersageadresse verwendet wird, um Daten aus dem Datencache-Speicher abzuholen und in den Datenpuffer einzuladen.

19. Datenadressenvorhersagestruktur nach einem der Ansprüche 15 bis 18, wobei die Decodierstufe eine Addiererschaltung (300) zum Erzeugen einer Datenadresse aus einem Basisregister und einem Verschiebewert enthält.

20. Datenadressenvorhersagestruktur nach Anspruch 19, wobei die Decodierstufe ferner eine Komparatorschaltung (302) und ein Register (301) aufweist, wobei die Komparatorschaltung mit der Addiererschaltung und dem Register verbunden ist.

21. Datenadressenvorhersagestruktur nach Anspruch 20, wobei das Register ausgebildet ist, die Datenvorhersageadresse zu speichern.

22. Datenadressenvorhersagestruktur nach Anspruch 21, wobei die Komparatorschaltung ausgebildet ist, einen Wert zu erzeugen, der die Richtigkeit der Datenvorhersageadresse angibt.

23. Datenadressenvorhersagestruktur nach Anspruch 22, wobei die Komparatorschaltung ausgebildet ist, den Wert zu dem Verzweigungsvorhersagearray zu übertragen.

## Revendications

1. Procédé pour fournir une pluralité d'octets associés à une adresse de prédiction de données qui sera référencée par une pluralité d'instructions résidant dans un bloc de base lorsque ledit bloc de base est extrait, ledit procédé comprenant les étapes consistant à :
générer une pluralité d'adresses de prédiction de données et stocker celles-ci dans une matrice de prédictions de branchement (270) incluant une pluralité de positions de mémoire, dans lesquelles une position particulière de ladite pluralité de positions de mémoire, dans laquelle une adresse particulière de ladite pluralité d'adresses de prédiction de données est stockée, est déterminée par l'adresse d'instruction d'une instruction de branchement qui pointe vers ledit bloc de base ;
extraire ladite pluralité d'octets à partir d'une antémémoire de données (224) vers un tampon de données (260) ; et
accéder au tampon de données à partir de l'étage de décodage (208) d'un traitement d'instructions en pipeline pour fournir ladite pluralité d'octets ;
dans lequel ledit bloc de base comporte un bloc d'instructions se terminant avec une instruction de branchement et présentant la propriété faisant que, si la première instruction du bloc est exécutée, alors chaque instruction suivante du bloc est exécutée.

2. Procédé selon la revendication 1 consistant, de plus, à arbitrer ladite adresse de prédiction de données avec une adresse de chargement et de stockage provenant d'une unité de chargement et de stockage (222) pour accéder à ladite antémémoire de données avant ledit accès.

3. Procédé selon la revendication 2, dans lequel ledit arbitrage sélectionne ladite adresse de chargement et de stockage pour un accès à ladite antémémoire de données pendant un cycle d'horloge au cours duquel ladite adresse de chargement et de stockage est valide.

4. Procédé selon la revendication 2 ou 3, dans lequel ledit arbitrage sélectionne ladite adresse de prédiction de données pour un accès à ladite antémémoire de données pendant un cycle d'horloge au cours duquel ladite adresse de chargement et de stockage n'est pas valide.

5. Procédé selon l'une quelconque des revendications précédentes, consistant, de plus, à actualiser ladite matrice de prédiction de branchement avec une nouvelle adresse de prédiction de données pendant un cycle d'horloge au cours duquel ladite adresse de prédiction de données se révèle être une erreur de prédiction.

6. Procédé selon la revendication 5, dans lequel ladite adresse de prédiction de données se révèle être une erreur de prédiction en comparant ladite adresse de prédiction de données à une adresse de décodage générée par ledit étage de décodage.

7. Procédé selon la revendication 5, dans lequel ladite actualisation est retardée jusqu'à ce qu'un nouveau bloc de base soit extrait.

8. Procédé selon la revendication 5, dans lequel ladite actualisation consiste, de plus, à stocker ladite nouvelle adresse de prédiction de données dans ladite matrice de prédiction de branchement dans une position de mémoire dans laquelle ladite position de mémoire a stocké antérieurement ladite adresse de prédiction de données.

9. Procédé selon l'une quelconque des revendications précédentes, consistant, de plus, à générer une adresse réelle de données à partir d'un registre de base et des données de déplacement, dans lequel ledit registre de base et lesdites données de déplacement sont spécifiés par une instruction de ladite pluralité d'instructions.

10. Procédé selon la revendication 9 consistant, de plus, à comparer ladite adresse réelle de données à ladite adresse de prédiction de données.

11. Procédé selon la revendication 10 consistant, de plus, à transférer ladite adresse de données et un résultat de ladite comparaison vers une unité de prédiction de branchement (220), ladite unité de prédiction de branchement comprenant ladite matrice de prédiction de branchement (270).

12. Procédé selon la revendication 9 dans lequel ledit accès audit tampon de données consiste, de plus, à déterminer si une pluralité d'octets associés à ladite adresse réelle de données est stockée à l'intérieur dudit tampon de données.

13. Procédé selon la revendication 12 consistant, de plus, à transférer ladite pluralité d'octets vers une unité de station de réservation (210) dudit traitement d'instructions en pipeline.

14. Procédé selon l'une quelconque des revendications précédentes, dans lequel le fait de générer une dite adresse de prédiction de données est réalisé pendant un cycle d'horloge au cours duquel ledit bloc de base est en cours d'extraction à partir d'une antémémoire d'instructions (204).

15. Structure de prédiction d'adresses de données comprenant :
une matrice de prédiction de branchements (270) comportant une pluralité de positions de mémoire pour stocker une pluralité d'adresses de prédiction de données dans laquelle une position particulière de ladite pluralité de positions de mémoire dans laquelle une adresse particulière de ladite pluralité d'adresses de prédiction de données est stockée, est déterminée par l'adresse d'instruction d'une instruction de branchement qui pointe vers un bloc de base contenant une instruction qui référencera ladite adresse de prédiction de données ;
un tampon de données (260) pour stocker une pluralité d'octets associés à une adresse de prédiction de données ; et
un étage de décodage (208) d'un traitement d'instructions en pipeline configuré pour accéder audit tampon de données ;
dans laquelle ledit bloc de base comporte un bloc d'instructions se terminant avec une instruction de branchement et présentant la propriété que si la première instruction du bloc est exécutée, alors chaque instruction suivante du bloc est exécutée.

16. Structure de prédiction d'adresses de données selon la revendication 15 dans laquelle ladite matrice de prédiction de branchement est une matrice linéaire desdites positions de mémoire.

17. Structure de prédiction d'adresses de données selon la revendication 15 ou 16, dans laquelle ledit tampon est configuré, de plus, pour stocker simultanément une pluralité de pluralités d'octets de données dans laquelle chaque pluralité de ladite pluralité des pluralités d'octets de données est associée à une adresse différente de prédiction de données.

18. Structure de prédiction d'adresses de données selon la revendication 15, 16, ou 17 comprenant, de plus, une antémémoire de données (224) couplée audit tampon de données et couplée, de plus, à ladite matrice de prédiction de branchement, dans laquelle ladite adresse de prédiction de données est utilisée pour extraire des données à partir de ladite antémémoire de données vers ledit tampon de données.

19. Structure de prédiction d'adresses de données selon l'une quelconque des revendications 15 à 18 dans laquelle ledit étage de décodage comporte un circuit additionneur (300) pour produire une adresse de données à partir d'un registre de base et une valeur de déplacement.

20. Structure de prédiction de données selon la revendication 19 dans laquelle ledit étage de décodage comporte, de plus, un circuit comparateur (302) et un registre (301) dans laquelle ledit circuit comparateur est couplé audit circuit additionneur et audit registre.

21. Structure de prédiction de données selon la revendication 20 dans laquelle ledit registre est configuré pour stocker ladite adresse de prédiction de données.

22. Structure de prédiction de données selon la revendication 21 dans laquelle ledit circuit comparateur est configuré pour produire une valeur indicatrice de la correction de ladite adresse de prédiction de données.

23. Structure de prédiction de données selon la revendication 22 dans laquelle ledit circuit comparateur est configuré en vue d'acheminer ladite valeur vers ladite matrice de prédiction de branchement.
